Europäisches Patentamt

European Patent Office

Office européen des brevets

(19)

(11) Publication number: **0 014 217**
**B1**

(12) **EUROPEAN PATENT SPECIFICATION**

(45) Date of publication of patent specification: **24.07.85.**   (51) Int. Cl.⁴: **F 16 L 11/11**

(21) Application number: **79900480.9**

(22) Date of filing: **23.04.79**

(86) International application number:
**PCT/JP79/00102**

(87) International publication number:
**WO 79/01016 29.11.79 Gazette 79/24**

(54) **CORRUGATED HOSE.**

(30) Priority: **02.05.78 JP 59940/78**
**25.05.78 JP 71505/78**
**10.07.78 JP 95414/78**

(43) Date of publication of application:
**20.08.80 Bulletin 80/17**

(45) Publication of the grant of the patent:
**24.07.85 Bulletin 85/30**

(84) Designated Contracting States:
**FR**

(56) References cited:
**FR-A-1 298 102**
**FR-A-1 391 262**
**GB-A-1 419 841**
**JP-B-46 020 230**
**JP-B-47 027 164**
**JP-Y-51 020 507**
**US-A-2 740 427**
**US-A-3 112 771**

(73) Proprietor: **TIGERS POLYMER CORPORATION**
**1-3, Higashi-Kanmaki 1-chome Takatsuki-shi**
**Osaka 569 (JP)**

(72) Inventor: **YAMAMURA, Michio Mukogawa**
**Factory of Tigers**
**Polymer Corporation No. 45, Motohama-cho,**
**1-chome**
**Amagasaki-shi, Hyogo 660 (JP)**

(74) Representative: **Karmin, Roger**
**Cabinet MONNIER 150, cours Lafayette**
**F-69003 Lyon (FR)**

Courier Press, Leamington Spa, England.

## Description

Field of the invention

This invention relates to a flexible hose capable of keeping its length under conditions of expansion, contraction and medium therebetween and of being kept as bent when the hose is bent.

Description of the prior art

Generally, this type of hose is called the folding hose. A single folding hose is available in optional length and is able to be put away as contracted when out of use, thereby being used as a suction hose for a cleaner or dust catcher. Or, the hose is maintainable at angle of bend optionally selected, thereby being used as a blast hose for a hair dryer or usual drying machine.

The hose also is used for the same purpose as a usual flexible hose, for example, as a dust-proof cover for an expansion joint at a machine tool or bending drain hose used for a kitchen sink or wash stand.

Conventionally three kinds of hose have been disclosed as follows: JP—B—43-23840 discloses a hose (a). The hose (a), which is smaller in cluckness without any reinforcement, is provided with folds extending at right angles to the direction of the length. One oblique side of each fold is made smaller than the other so that when the hose is put away the smaller oblique side is slant elastically at the same angle of bend as the larger oblique side, thereby being kept in this condition. However, the hose (a), when increasing in diameter, becomes weak to that extent in keeping its form, and further the elasticity of oblique side becomes poor.

Similarly to the above, JP—B—45-14745 discloses a hose (b) whose oblique sides at each fold are made equal in place of unequal oblique sides of the hose (a). Also, one oblique side is made larger in thickness than the other so that when the hose is contracted the thin oblique side is positioned merely along the thick oblique side without elastic effect, thereby being kept in this condition. The hose (b) however, is defective because its form-keeping is not expectable as its diameter becomes larger.

Both the hoses (a) and (b), which have each a wall of elastic material of synthetic resin, are not constant in length due to condition of material.

Next, JP—B—47-27164 discloses a hose which has ability of keeping its formation. The hose is formed in a bellows type to have a wall of synthetic resin, the wall being attached at the outer surface thereof with a reinforce coil, so that oblique sides of bellows hose is reformed to curve, one of which curved oblique sides is made elastic to have the same effect as the aforesaid hose (a). The hose is reformed to curve at oblique sides after once molded so that there is a fear that the folding effect is lost when in use for a long time. Furthermore, there is a defect that warm air passing through the hose for a long time, removes the curved formation.

It is disclosed in GB—A—1 419 841 a folding hose formed in a bellows type with a hose wall of synthetic resin attached to a coil to give the hose a chevron-like shape having crests and valleys wherein the hose wall is formed of a tape spirally wound and the windings of which overlap on the crest of the chevron, while the portions where the hose wall departs from said coil near the crest of said chevron and said valley are made slightly smaller in thickness.

The folding hose according to the invention differs therefrom in that the side of the hose wall departing from the chevron is positioned closer to the crest than the other side and in that the modulus of elasticity in bending of synthetic resin constituting said hose wall is defined in a range of 2.500 to 14.000 kg/cm².

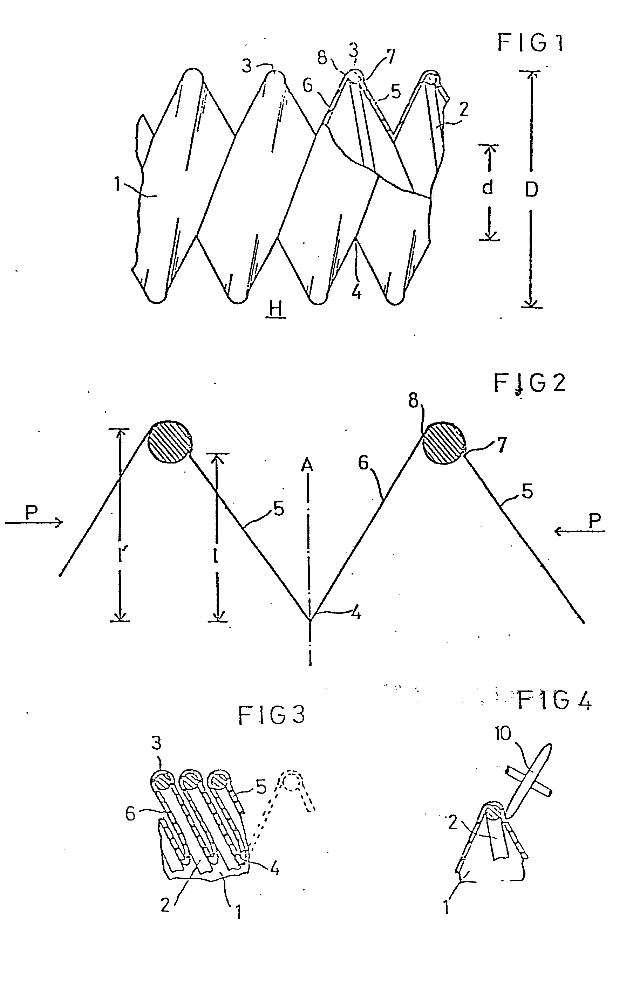

Document GB—A—1 419 841 shows the left oblique side turned over elastically so that the left and right oblique sides are slanted in the same direction. FR—A—1 298 102 (fig. 3 and 4), US—A—2 740 427 (fig. 3) and JP—Y—51-20507 (fig. 4) show a folding hose having a hose wall departing at one side of the chevron closer by the crest than the other side.

None of the documents cited describe the shoulders near the crest serving as bending portions in having the said relation l<l' to allow the left shoulder at first to start to bend at the fulcrum point of the valley. With such arrangements as bellows configuration of the hose wall, a little harder setting of the modulus of bending rigidity of the hose wall, and height difference between the right and left sides where the hose wall departs from the coil, the present patent intends to provide one of the oblique sides of the hose wall with spring action so that the oblique side sticks out when the hose is expanded or contracted.

Under expanded or contracted condition, therefore, the hose can be stationary as it is because of the stick-out action of one of the oblique sides.

When the hose is bent, the oblique side sticks out as being expanded at the outside and contracted at the inside making it possible to keep the hose stationary under any desired bending condition.

Being made to same thickness, the right and left oblique sides can be equally durable, which serves to maintain the folding effect of the hose.

While the hose of which wall thickness is thinner at one oblique side is subjected to expansion it creases on the thinner side.

The parallel contact between the oblique sides when the hose is contracted makes the hose length much shorter which, coupled with the stationary arrangements under the contracted condition, facilitates handling of the hose at storing, packing, and transportation.

Summary of the invention

In view of the aforesaid problems, this invention has been designed. An object of the invention is the provision of a folding hose which eliminates the defects of conventional folding hose, having ability to keep its formation regardless of length of diameter, and maintaining the folding effect even when warm air flows through the hose.

Another object of the invention is the provision of a folding hose of construction such that the conventional hose of bellows with a reinforce coil is not necessary to considerably change its molding process.

In order to achieve the aforesaid objects the inventor has noticed that when expanding or contracting the hose wall is bent at the shoulders at both sides of each chevron and each valley and that the stiffness of hose wall is concerned.

A folding hose according to the invention is characterized by the features indicated in the second part of claim 1. Preferred embodiments of the invention are disclosed in the subclaims.

By this, the folding hose of the invention, when expanded, is kept stable because the formkeeping strength and stiffness with respect to bending at the wall allow to oblique sides between the chevron and the valley to stretch. However, when the hose is subjected to the external force in the direction of contraction, the upper bending portion at the crest side and the valley start to bend, and the oblique side having the upper bending portion becomes gradually larger in the angle of inclination than the oblique side having the lower bending portion at the valley sides, and is turned over elastically across the phantom perpendicular at the valley to thereby slant at an angle in the same direction as the oblique side having the lower bending porting, thus contracting the hose. Under this condition, the two oblique sides still stretch to each other, thereby keeping the hose in contraction as far as no external force is applied to the hose. The hose, when bent, keeps the outer wall of hose in expansion as aforegoing and keeps the inner wall in contraction, whereby the hose, even when bent, is kept in the bending condition as far as no external force is applied to the hose.

Brief description of the drawings

Fig. 1 is a partially cutaway side view of the hose of the invention, showing the basic construction thereof and a part of the hose wall in section,

Fig. 2 is an enlarged schematic diagram of the hose wall for explanation of folding effect,

Fig. 3 is a sectional view of the folded hose,

Fig. 4 is a schematic view of molding process for enlarging a range of adhesion of the wall to a coil,

Fig. 5 is a sectional view of the hose in a modified embodiment of the invention, and

Fig. 6 is a sectional view of the hose in another modified embodiment, in which the upper bending portion and valley are made small in thickness.

Preferred embodiments of the invention

Embodiments of the invention will be detailed in the following description in accordance with the accompanying drawings.

In Fig. 1, a bellows type hose $H$ is shown, in which a coil 2 is adhered to the inner surface of a hose wall 1, the adhesion therebetween constituting a chevron 3.

The hose wall 1 is made of synthetic resin of modulus of elasticity in bending in a range of 2.500 to 14.000 kg/cm², where in this embodiment synthetic resin of mitxure of polypropylene and ethylene-propylene copolymer, of modulus of elasticity in bending of 5.100 kg/cm² is used.

The coil 2 is formed of a wire circular in section, the wire being made of hard synthetic resin stuck to the hose wall 1. The coil 2 may be made of a hard wire coated with homogeneous synethetic resin.

At the chevron 3 an oblique side 5 at the right side with respect to the coil 2 is stuck thereto at a larger area and an oblique side 6 at the left side is smaller. Hence, the shoulder 7 at the right hand side of the oblique side 5 at the chevron 3 leaves the coil 2 at a side near a valley 4, while, the shoulder 8 at the lefthand side of the oblique side 6 leaves the coil 2 at a portion thereof near the crest of chevron 3.

The hose $H$ shown in Fig. 1 is kept in expansion by stretching both the right and left oblique sides 5 and 6.

Next, folding of the hose will be detailed according to Fig. 2.

A usual hose, when contracted, bends at both the shoulders at the chevron where the hose wall leaves the coil and at the valley (if the hose wall is soft the oblique side happens to bend), which is well-known.

In this invention, both the shoulders 7, 8 and valley 4 serve as the bending portions. When the hose $H$ is subjected to the force in the arrow $P$ direction for contraction, height $l$ from the valley 4 to the end of adhesion at the right side shoulder 7 and that $l'$ from the valley 4 to the end of adhesion at the left shoulder 8, have relation of $l<l'$ to allow the left shoulder 8 at first to start to bend at the fulcrum point of valley 4, thus gradually enlarging an angle of inclination at the left oblique side 6 to approach the phantom perpendicular $A$ at the valley 4. When further applied with the force in the direction $P$, the left oblique side 6 is turned over elastically across the perpendicular $A$, so that the left and right oblique sides 6 and 5 are slant in the same direction to thereby keep the hose $H$ in contraction. In the contraction, a major diameter $D$ at the crest and a minor one $d$ at the valley of the hose are constant and the left and right oblique sides 6 and 5 have stiffness against bending to stretch to each other, whereby the contraction condition is kept as far as no force is applied reversely to the arrow $P$ direction.

In addition, in order to lower the end of adhesion at the right shoulder 7 in comparison with the left shoulder 8, the hose, when molded, is applied at the right shoulder with a press roller 10 to enlarge an adhesion area of hose wall 1 to coil 2 as shown in Fig. 4.

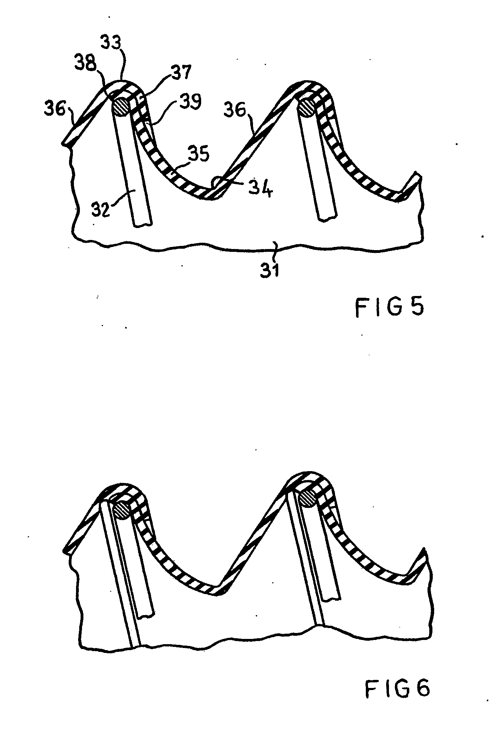

The hose in fig. 5 has the right shoulder 37 at the chevron 33 is made larger in thickness throughly in length. The end of adhesion of a hose wall 31 to a coil 32 at the left shoulder 38 is positioned higher than the right shoulder 37. The bending portion of right oblique side 35 is the end 39 of the thick portion and that of left oblique side 36, the end of ahesion to the coil 32. Hence, the bending portion of the right oblique side 35 is positioned lower than that of left oblique side 36, thereby obtaining the same effect as the hose in Fig. 1.

A still further embodiment in Fig. 6 is so constituted that the higher bending portion is made slightly smaller in thickness than the hose wall at the oblique side so as to facilitate bending of left oblique side, whereby a further smaller force is performable of elastically turning the left oblique side. In addition, the higher bending portion and the valley may, not shown, be made smaller in thickness throughout the whole length.

Availability for industry

As clearly understood from the aforesaid description, the folding hose of the invention is selective of hose length corresponding to usage of the cooler or dust catcher regardless of dimension of dimaeter at the same. Furthermore, the hose is available for flowing warm air or water through the hose fixed, as it is bent, to the drying machine, or drain of a sink or wash stand and also for jointing portions where errors appear easily in mounting distance.

**Claims**

1. A folding hose (H) formed in a bellows type with a hose wall (1) of synthetic resin attached to a coil (2, 32) to give the hose a chevron-like shape having crests and valleys (4, 34), the hose wall (1) being formed of a tape spirally wound and the windings of which overlap on the crest of the chevron (3, 33) and wherein the portions where the hose wall (1) departs from said coil (2, 32) near the crest of said chevron (3, 33) and said valley (4, 34) are made slightly smaller in thickness, characterized in that the modulus of elasticity in bending of synthetic resin constituting said hose wall (1) is defined in a range of 2.500 to 14.000 kg/cm², and in that throughout the whole length of said hose (H) one of said portions where said hose wall (1) departs at both sides of said chevron (3, 33) from said coil (2, 32) is positioned closer by the crest of said chevron (3, 33) and farther from the valley (4, 34) of said chevron than the other of said portions departing from said coil (2, 32) on the other side of the crest of said chevron (3, 33).

2. A folding hose according to claim 1, characterized in that only one shoulder (37) of the chevron (33) of the hose wall (31) adhered to the coil (32) is made larger in thickness throughout the whole length of said hose.

3. A folding hose according to claim 1 or 2, characterized in that said valley (4) is made smaller in thickness.

4. A folding hose according to either claims 1 to 3, characterized in that said one portion where said hose wall (1) departs from said coil (32) closer by the crest of said chevron (33) is made slightly smaller in thickness.

**Patentansprüche**

1. Faltschlauch (H), geformt aus Faltenbälgen, mit einer Schlauchwand (1) aus Kunstharz, die an einer Spule (2, 32) angebracht ist, um dem Schlauch eine Zick-Zack-Form zu geben, die Kämme und Täler (4, 34) aufweist, wobei die Schlauchwand (1) aus einem spiralförmig gewickelten Band gebildet ist und die Windungen dieses Bandes sich auf dem Kamm des Zick-Zack-Gebildes (3, 33) überlappen, und wobei diejenigen Abschnitte, an denen die Schlauchwand (1) von der Spule (2, 32) in der Nähe des Kamms des Zick-Zack-Gebildes (3, 33) und dem Tal (4, 34) wegführt, eine etwas geringere Dicke aufweisen, dadurch gekennzeichnet, daß der Elastizitätsmodul für das Biegen des Kunstharzes, aus dem die Schlauchwand (1) besteht, im Bereich von 2500 bis 14000 kg/cm² liegt, und daß über die ganze Länge des Schlauches (H) einer jener Abschnitte, an denen die Schlauchwand (1) zu beiden Seiten des Zick-Zack-Gebildes (3, 33) von der Spule (2, 32) wegführt, näher an dem Kamm des Zick-Zack-Gebildes (3, 33) und weiter weg von dem Tal (4, 34) des Zick-Zack-Gebildes angeordnet ist als der andere jener Abschnitte, die von der Spule (2, 32) auf der anderen Seite des Kamms des Zick-Zack-Gebildes (3, 33) ausgehen.

2. Faltschlauch nach Anspruch 1, dadurch gekennzeichnet, daß nur eine Schulter (37) des Zick-Zack-Gebildes (33) der Schlauchwand (31), die an der Spule (32) hängt, über die ganze Länge des Schlauches eine größere Dicke aufweist.

3. Faltschlauch nach Anspruch 1 oder 2, dadurch gekennzeichnet, daß das Tal (4) eine kleinere Dicke aufweist.

4. Faltschlauch nach jedem der Asnsprüche 1—3, dadurch gekennzeichnet, daß der eine Abschnitt, in dem die Schlauchwand (1) von der Spule (32) wegführt und der dem Kamm des Zick-Zack-Gebildes (33) näherliegt, eine etwas geringere Dicke besitzt.

**Revendications**

1. Un tuyau repliable (H) fait suivant un type à soufflet avec une paroi en résine synthétique (1) collée à un solénoïde (2, 32) en vue de donner au tuyau la forme d'un chevron pourvu de crêtes et de creux (4, 34), ladite paroi (1) étant constituée par un cordon enroulé en spirale dont les spires chevauchent la crête du chevron (3, 33), dans lequel les parties où la paroi (1) du tuyau s'écarte dudit solénoïde (2, 32) près de la crête dudit chevron (3, 33) et du creux (4, 34) sont prévues d'épaisseur légèrement moindre, caractérisé en ce que le module d'élasticité à la flexion de la résine synthétique constituant ladite paroi (1) est compris dans un domaine de 2.500 à 14.000 kg/cm² et en ce que sur toute la longueur dudit tuyau (H) une desdites parties où cette paroi (1) s'écarte dudit solénoïde (2, 32) sur les deux côtés dudit chevron (3, 33) est située plus prêt de la crête dudit chevron (3, 33) et plus loin du creux (4, 34) de celui-ci que l'autre partie qui s'écarte dudit solénoïde (2, 32) sur l'autre côté de la crête dudit chevron (3, 33).

2. Tuyau repliable suivant la revendication 1, caractérisé en ce que seul un épaulement (37) du chevron (33) de la paroi (31) du tuyau collée au solénoïde (32) est prévu plus épais suivant toute la longueur dudit tuyau.

3. Tuyau repliable suivant la revendication 1 ou 2, caractérisé en ce que ledit creux (4) est prévu d'épaisseur moindre.

4. Tuyau repliable suivant l'une des revendications 1 à 3, caractérisé en ce que la partie où ladite paroi (1) du tuyau s'écarte dudit solénoïde (32) plus près de la crête dudit chevron (33) est prévue d'épaisseur un peu moindre.

0 014 217

FIG 1

FIG 2

FIG 3

FIG 4

1

FIG 5

FIG 6